Europäisches Patentamt

European Patent Office

Office européen des brevets

(19)

(11) Veröffentlichungsnummer: **0 099 959**
**B1**

(12) **EUROPÄISCHE PATENTSCHRIFT**

(45) Veröffentlichungstag der Patentschrift: **06.02.91**

(51) Int. Cl.⁵: **B 65 H 67/06**

(21) Anmeldenummer: **83103262.8**

(22) Anmeldetag: **02.04.83**

(54) **Vorrichtung zum Aneinanderreihen von Kreuzspulen.**

(30) Priorität: **20.07.82 CH 4409/82**

(43) Veröffentlichungstag der Anmeldung:
**08.02.84 Patentblatt 84/06**

(45) Bekanntmachung des Hinweises auf die
Patenterteilung:
**06.02.91 Patentblatt 91/06**

(84) Benannte Vertragsstaaten:
**CH DE FR GB IT LI**

(56) Entgegenhaltungen:
**DE-A-1 611 712        GB-A-1 103 066**
**DE-A-2 457 802        GB-A-2 031 367**
**DE-A-2 659 036        GB-A-2 093 425**
**DE-B-2 842 432        US-A-4 062 439**
**DE-C-1 298 873        US-A-4 118 920**
**FR-A-2 301 458        US-A-4 142 624**
**FR-A-2 492 783**

(73) Patentinhaber: **MASCHINENFABRIK RIETER AG**
**Postfach 290**
**CH-8406 Winterthur (CH)**

(72) Erfinder: **Lattion, André**
**Gotthelfstrasse 51**
**CH-8472 Seuzach (CH)**

Courier Press, Leamington Spa, England.

## Beschreibung

Die vorliegende Erfindung bezieht sich auf eine Vorrichtung an einer Spinnmaschine zum Wegfördern von auf einer Spinnmaschine bewickelten Kreuzspulen mit einem Hilfstransportband, welches mit einem dem Wegführen der Spulen dienenden, sich längs der Spinnmaschine erstreckenden Haupttransportband in einer Flucht liegt, wobei der Anfang des Hilfstransportbandes an das Ende des Haupttransportbandes angrenzt und beim Transport der Spulen auf den Transportbändern die Spulenachsen der Spulen parallel zu ihrer Bewegungsrichtung liegen.

Durch die DE-B-28 42 432 ist eine Vorrichtung dieser Art zum Ablegen von Kreuzspulen bekannt geworden, gemäss welcher die Kreuzspulen von einem sich über die Länge der Spinnmaschine erstreckenden Transportband auf ein zweites Transportband gelangen und anschliessend von dem letzteren in einen Transportbehälter fallen.

Dabei werden die auf den Spinnstellen aufgewickelten Spulen auf einem sich in der Maschinenlängsrichtung erstreckenden Transportband abgelegt, und zwar mit der Hülsenachse in dieser Längsrichtung orientiert und mit den äusseren Spulenwindungen in Berührung mit dem Transportband. Die Ablage der Spulen von dem Hilfsförderband in einen Behälter erfolgt am Maschinenende, wo ein ''Fallschacht'' zur Führung der Spulen nach unten bis auf den Boden des Behälters angeordnet worden ist (bzw. sein kann). Die Fallbewegung der Spulen wird durch eine deformierbare Schachtwand abgebremst. Im Behälter selber dürfen die Spulen sich selbst durch Abrollen anordnen. Nachdem eine Spulenreihe gebildet worden ist, wird sie durch den Schacht a eine Behälterwand oder an die Nachbarreihe gedrückt, um die Reihen dicht aneinanderzupacken.

Es ist zwar die Aufgabe der in der DE-B-2842432 vorgeschlagenen Lösung, die Beschädigung von Kreuzspulen bei der Ablage zu verhindern. Die Risiken einer solchen Beschädigung beim Fallenlassen der Spulen sind aber offensichtlich, und beim wirksamen Bremsen zur Verminderung der Beschädigungsrisiken könnte die Anlage verstopft werden.

Die GB-A-1103066 beschreibt ein System zur Automatisierung einer Ringzwirnmaschine. Gemäss diesem Vorschlag soll eine volle Spule an einem Ende durch einen auf einem Wagen montierten Greifer gefasst und durch eine Aufwärtsbewegung des Greifers von der Spindel abgehoben werden. Die vom Greifer getragene Spule wird dann in einer Zwischenstation auf einen von einer Basis aufragenden Stift aufgesteckt, wonach die Einheit ''Basis + Spule'' zum Maschinenende getragen und da vom Greifer auf ein Transportband fallengelassen wird, wobei die Basis mit dem Transportband in Berührung kommt. Das Band läuft quer zur Maschinenlängsrichtung zu einer Sammelstelle.

Eine vorbestimmte Anzahl solcher Einheiten wird in der Sammelstelle zu einer Gruppe gebildet, wonach diese zusammen in einer Richtung quer zum Transportband in einen Karton geschoben wird. Zusammen mit vier weiteren Gruppen bildet sie eine Schicht im Karton. Die Basen greifen ineinander, und eine Platte wird über die Schicht gelegt, um die Anordnung zu stabilisieren.

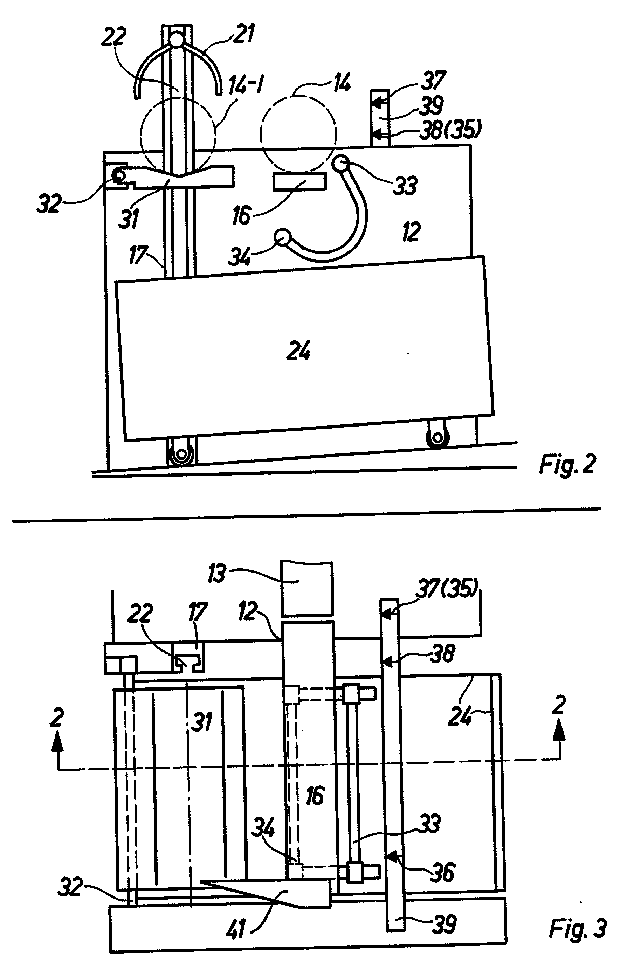

Die Spulen selber können mit Endflanschen (Fig. 3) versehen werden, können aber auch aus Hülsen ohne Flansche gebildet werden, wobei ein Antriebsmittel von einem Ende in die Hülse hineinragen soll (Seite 1 der britischen PS). Solche Spulen werden auf senkrecht stehenden Spindeln gebildet, was natürlich die Greifoperation ermöglicht.

Das System ist aufwendig und kompliziert. Der Transport auf der Maschine selber wird durch ineffizientes Hin- und Herfahren des Wagens durchgeführt. Die Basen stellen sowohl Zusatzaufwand als auch Komplikationen dar. Die Schräganordnung des Transportbandes verlangt viel Platz in der Spinnerei und beeinträchtigt den Zugang zu Nachbarmaschinen.

Die DE-A-1611712 beschreibt eine Transportanlage zum Fördern von Schlauchpaketen über eine vorbestimmte Bahn zwischen einer Paketbildevorrichtung und einer Säckeherstellungsmaschine. Die Anlage dient gleichzeitig als Puffer oder Speicher zum Ausgleich von Unterschieden in den Arbeitstakten der Maschine an beiden Enden des Förderweges.

Die Transportanlage umfasst eine Mehrzahl von Transportbändern, wovon jedes Band eine vorbestimmte Anzahl Pakete aufnehmen kann. Die Bänder sind durch auf die Pakete ansprechende Fototaster gesteuert, und zwar derart, dass, wenn ein bestimmtes Band mit Paketen belegt und das nächste Band frei ist, die Paketegruppe vom ersten Band mit hoher Transportgeschwindigkeit auf das zweite Band überführt wird. Dieser Vorgang wiederholt sich von Band zu Band, so dass die Paketfüllung des ersten Bandes schnell von Band zu Band voranbewegt wird, bis das nächste bereits mit Paketen besetzte Band, dessen Fototaster ein entsprechendes Signal abgibt, diesen Transport beendet. Auf diese Weise wird der im Augenblick freie Speicherraum stets an das Zulaufende der Speichereinrichtung verlegt, so dass stets das lückenlose Füllen des Speichers gewährleistet ist.

Zur Bildung einer Paketegruppe auf dem ersten Band der Anlage schaltet ein Fototaster dieses Band in Abhängigkeit vom Paketausstoss der Paketbildevorrichtung schrittweise so, dass die Pakete mit geringem gegenseitigem Abstand x auf das Speicherband übergeleitet werden.

Es ist die Aufgabe der vorliegenden Erfindung, ein Gerät zur Verfügung zu stellen, welches Kreuzspulen von einer Spinnmaschine übernehmen und geordnet auf schonende Weise an ein Transportmittel zur Weiterbeförderung abgeben kann. Dabei soll der zur Verfügung stehende Platz am Maschinenende effizient genutzt werden.

Die Lösung dieser Aufgabe besteht nach der Erfindung ausgehend von einer Vorrichtung gemäss dem Oberbegriff des Anspruchs 1 darin, dass zum Steuern der Bewegungen des Hilfstransportbandes zwecks Aneinanderreihens der Spulen auf diesem Band ein Detektor vorgesehen ist, der durch die von den Transportbändern bewegten Spulen betätigbar ist und sich in dem Bereich befindet, in welchem die beiden Transportbänder aneinandergrenzen, und der beim Vorbeibewegen einer Spule das Inbewegungsetzen des Hilfstransportbandes bewirkt, und dass Mittel vorgesehen sind zum Anhalten des Hilfstransportbandes nach einer Bewegung desselben um eine Strecke, welche wenigstens ungefähr der Hülsenlänge der Spulen gleich ist, sowie Mittel um nach Aneinanderreihen einer vorbestimmten Anzahl von Spulen auf dem Hilfstransportband zu einer Gruppe diese Spulengruppe bei stillstehendem Hilfstransportband gemeinsam quer zu dessen Längsrichtung wegzufördern und in einer Reihe gemeinsam abzulegen.

Weitere Ausgestaltungen der Erfindung sind Gegenstand der Ansprüche 2 bis 8.

Im folgenden sei die Erfindung anhand von Ausführungsbeispielen anhand der Zeichnungen näher erläutert. In der letzteren ist

Figur 1 eine perspektivische Darstellung, in welcher eine erfindungsgemässe Vorrichtung gezeigt ist,

Figur 2 eine Seitenansicht einer weiteren Ausführungsform, als schematischer Querschnitt entlang der Linie 2...2 der Figur 3 dargestellt, und

Figur 3 ein Grundriss der Ausführungsform gemäss Figur 2.

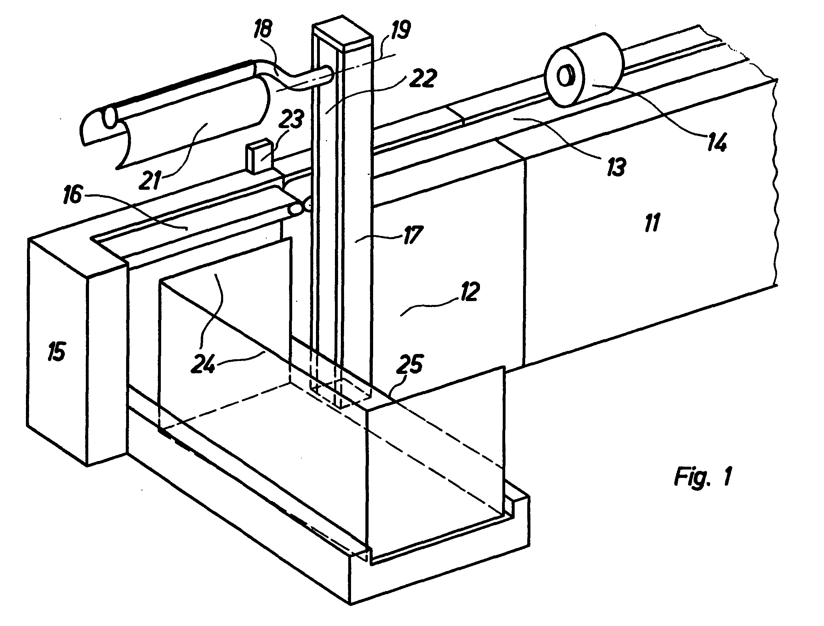

Figur 1 zeigt eine Spinnmaschine 11 mit einer Vielzahl von nicht gezeichneten Spinnstellen, an welche sich ein Antriebs- oder Endkopf 12 anschliesst. Ueber die gesamte Länge der Spinnmaschine 11 erstreckt sich ein Haupttransportband 13, auf welchem auf der Spinnmaschine 11 bewickelte Kreuzspulen 14 in der Richtung gegen den Antriebs- oder Endkopf 12 hin transportiert werden. Anschliessend an den letzteren ist ein Spulenstapler 15 vorgesehen. Dieser weist ein Hilfstransportband 16 auf, welches zur Uebernahme der vom Band 13 herangeführten Kreuzspulen 14 dient und diese, gemäss Figur 1, ebenfalls von rechts nach links, bewegt. Wie ersichtlich, grenzt das Ende des vom Haupttransportband 13 gebildeten Transportweges an den Anfang des vom Hilfstransportband 16 gebildeten Transportweges an. Längs einer Säule 17 ist ein von einem Arm 18 getragener, drehbar an diesem befestigten Spulengreifer 21 auf- und abwärts bewegbar, wobei der Arm 18 in einem Schlitz 22 geführt ist. Der Arm 18 ist ausserdem um die Achse 19 schwenkbar. Ausserdem ist ein Detektor 23 vorgesehen, welcher durch die sich an ihm vorbeibewegenden Spulen 14 beeinflusst wird. Zu diesem Zweck weist der Detektor 23 einen Kondensator auf, welcher durch die sich vorbeibewegenden Spulen 14 eine Kapazitätsänderung erfährt. Die letztere dient zum Erzeugen eines Signals. Zusätzlich ist noch ein Spulenwagen 24 vorhanden, dessen Boden, gemäss Figur 1, nach hinten etwas abfallend ist. Der abfallende Boden bewirkt, dass die in den Spulenwagen 24 eingefüllten Spulen nicht ins Rollen geraten, sofern mit dem Einfüllen an der niedrigsten Stelle des Bodens begonnen und dieses gegen dessen höchste Stelle hin fortgesetzt wird. Der Vollständigkeit halber sei erwähnt, dass an Stelle eine abfallenden Bodens ein Spulenwagen mit wellenförmig strukturiertem Boden verwendet werden kann, bei welchem die Kreuzspulen in die Wellentäler abgelegt werden. In einem solchen Fall wird das maschinelle Ablegen entsprechend der Bodenausbildung gesteuert.

Im Betrieb der in Figur 1 gezeigten Anordnung gelangen die voll bewickelten Kreuzspulen 14 zeitlich beliebig verteilt auf das Haupttransportband 13, welches sich im allgemeinen dauernd in Bewegung befindet. Dabei liegen die Achsen der sich auf dem Band 13 befindlichen Kreuzspulen 14 parallel zu ihrer Bewegungsrichtung, d.h. zur Bewegungsrichtung des Bandes 13. Sobald eine Spule 14 zum Detektor 23 hin gelangt, wird dieser durch die Spule 14 beeinflusst. Dadurch wird ein Startsignal erzeugt, durch welches das Hilfstransportband 16, welches bis dahin stillgestanden war, in dem Zeitmoment in Bewegung gesetzt wird, in welchem diese eintreffende Kreuzspule 14 durch das Band 13 auf das Band 16 geschoben wird. Sowie sich die Spule 14 am Detektor 23 vorbei bewegt hat, tritt an dessen Kondensator wieder eine Kapazitätsänderung ein. Durch diese wird ein Stoppsignal erzeugt, durch welches das Band 16 wiederum stillgesetzt wird. Das Inbewegungsetzen und das Anhalten des Bandes 16 wird somit durch denselben Detektor 23 gesteuert. Beim Eintreffen der nächstfolgenden Spule wiederholt sich der beschriebene Vorgang, wodurch die zweite Kreuzspule auf das Hilfstransportband 16 aufgesetzt wird. Durch eine geeignete Einstellung des Detektors 23 wird erreicht, dass die zweite Spule unmittelbar hinter die erste Spule 14 gereiht wird.

Wenn auf diese Weise eine bestimmte Zahl von Spulen, z.B. deren vier, auf dem Hilfsband 16 aneinander gereiht sind, was beispielsweise durch Verwendung eines den Weg des bewegten Bandes 16 messenden Wegmessgerätes, beispielsweise eines Schrittzählers festgestellt wird, so wird der Spulengreifer 21 nach unten bewegt und die vier auf dem Hilftransportband 16 aneinandergereihten Spulen werden vom Spulengreifer 21 erfasst. Daraufhin wird im gezeigten Beispiel der Arm 18 um 180° um die Achse 19 geschwenkt, wobei der drehbar befestigte Spulengreifer 21 in der gezeigten Lage nach unten gerichtet bleibt. Nach dem Absenken des Greifers 21 werden die vier von ihm getragenen Spulen in den Spulenwagen 24 eingelegt.

Anstelle des um die Achse 19 schwenkbaren Spulengreifers 21 kann ein fester Greifer vorgesehen sein und es kann das Hilftransportband 16 dafür, z.B. nach unten, wegklappbar ausgeführt sein.

Um zu vermeiden, dass bei der gezeigten Ausführungsform die Kreuzspulen 14 bei ihrer Freigabe durch den Greifer 21 fallen gelassen werden müssen, ist die Seitenwand 25 des Spulenwagens 24 niedriger als die übrigen drei Seitenwände. Dadurch ist ein genügendes Absenken des Armes 18 und des Greifers 21 möglich. Falls es erwünscht ist, dass am Wagen 24 alle vier Wände gleich hoch sind, wird eine höhere Säule 17 vorgesehen und der Spulengreifer 21 an einem sich nach unten erstreckenden Arm befestigt, welcher in den durch die vier Wagenwände gegebenen Raum eintauchbar ist und an dessen unterem Ende der Spulengreifer 21 um eine horizontale Achse schwenkbar getragen ist.

Im in den Figuren 2 und 3 gezeigten Ausführungsbeispiel sind die Teile, welche mit im ersten Beispiel vorkommenden Teilen identisch sind, mit gleichen Bezugszeichen bezeichnet. Es sind wiederum ein Haupt- und ein Hilfstransportband 13 bzw. 16, sowie eine spule 14 gezeigt. Im weitern sind ein Antriebs- oder Endkopf 12 und eine Säule 17 vorhanden. Der Schlitz 22 bilden wiederum eine Führung, um einen Spulengreifer 21 auf- und abwärts zu bewegen. Zusätzlich ist ein Spulenwagen 24 vorgesehen.

Eine Mulde 31 dient zur Aufnahme der vom Hilfstransportband 16 wegbeförderten Spulen. Die Mulde 31 ist mittels der Welle 32 nach unten in eine senkrechte Lage schwenkbar, um ein beliebiges Auf- und Abwärtsbewegen des Spulengreifers 21 längs der Säule 17 zu ermöglichen. Ein Spulenschieber umfasst eine um eine Welle 34 schwenkbare und von Bügeln getragene Stossstange 33. In einem Gehäuse 39 sind Fotozellen 35, 36, 37 und 38 vorhanden. Die den Fotozellen 35, 36, 37, 38 zugeteilten Lichtquellen sind in den Figuren 2 und 3 nicht gezeichnet. Deren Lichtstrahlen fallen, gemäss den Figuren 2 und 3 von links her, in bekannter Weise auf die Zellen 35, 36, 37 und 38 auf. Dabei befindet sich die Fotozelle 35 senkrecht unterhalb der Fotozelle 37 und auf gleicher Höhe wie die Fotozellen 36 und 38. Am einen Ende des Hilfstransportbandes 16 befindet sich ein Anschlag 41 für die Kreuzspulen 14. In Figur 3 sind der besseren Klarheit wegen der Spulengreifer 21, die Spulen 14 und die im folgenden erwähnten Spulen 14' nicht gezeichnet.

Im Betrieb der in den Figuren 2 und 3 gezeigten Anordnung werden wiederum Kreuzspulen 14 vom Haupttransportband 13 zum Hilfstransportband 16 transportiert. Dabei liegen die beiden Transportbänder in einer Flucht und die Achsen der Kreuzspulen 14 parallel zu ihrer Bewegungsrichtung, d.h. zur Bewegungsrichtung dieser Bänder. Mit dem Eintreffen einer ersten Spule 14 am Ort der benachbarten Enden der durch diese Transportbänder gebildeten Transportwege wird die Fotozelle 35 betätigt. Dadurch wird das Band 16 in Bewegung gesetzt und die erste, vom Haupttransportband heran geführte Kreuzspule vom Band 16 mitgenommen, Sobald diese erste Spule 14 den Lichstrahl zur Fotozelle 35 wieder frei gibt, wird das Band 16 wieder stillgesetzt.

Mit dem Eintreffen einer zweiten Spule 14 wird wiederum die Fotozelle 35 betätigt, dadurch das Band 16 wieder in Bewegung gesetzt, die zweite Spule an die erste Spule gereiht und mit der Freigabe der Fotozelle 35 durch die zweite Spule das Band 16 wieder stillgesetzt, wie dies bereits auch anhand der Figur 1 ausgeführt wurde. Dies wiederholt sich, bis die erste Spule so weit gegen den Anschlag 41 hin bewegt wurde, dass sie die Fotozelle 36 betätigt. Die Betätigung derselben bewirkt ein Abstellen des Haupttransportbandes und nach erfolgtem Stillstehen des Hilfstransportbandes 16, eine Betätigung der Stossstange 33. Dabei stösst diese die sich auf dem Band 16 befindlichen Spulen 14 seitlich weg, wodurch diese auf der Mulde 31 in die durch die Spule 14' gezeigte Lage zu liegen kommen. Nach erfolgter Rückbewegung der Stossstange 33 wird das Haupttransportband wieder in Bewegung gesetzt und es können wieder Kreuzspulen 14 auf das Hilfsband 16 aufgereiht werden. Zusätzlich wird der längs des Schlitzes 22 der Säule 17 auf- und abbewegbare Spulengreifer 21 betätigt, welcher die Spulen 14' erfasst und anhebt. Daraufhin wird die Mulde 31 um die Welle 32, z.B. nach unten geklappt, der Spulengreifer 21 nach unten bewegt und werden die von ihm erfassten Kreuzspulen im Spulenwagen 24 abgelegt.

Es besteht eine Vielzahl von Variationsmöglichkeiten in der Betriebsweise der erfindungsgemässen Vorrichtung, von denen die folgenden erwähnt seien:

Wird, wie vorstehend beschrieben, durch den Detektor 35 nur eine einzige Art eines Steuervorganges erzeugt, nämlich das Inbewegungsetzen des Bandes beim Einlaufen der Spulen 14, so sind Vorkehrungen getroffen, durch welche sich das Band 16 bei jedem Inbewegungsetzen um eine Distand bewegt, welche der Hülsenlänge der Spulen 14 gleich ist und durch welche daraufhin das Band 16 wieder automatisch stillgesetzt wird. Eine solche Arbeitsweise kann unter Verwendung eines Wegmessgerätes erhalten werden.

In einer weiteren Ausführungsform wird, wie in Figur 2 und 3 gezeigt, das Band 16 durch ein von der Fotozelle 35 geliefertes Startsignal in Bewegung gesetzt. Das Anhalten des Bandes 16 erfolgt in dieser Ausführungsform nicht durch die Fotozelle 35, sondern durch ein von einer Fotozelle 38 geliefertes Stoppsignal, welches beim Unterbrechen des auf, die Zelle 38 auffallenden Lichtstrahls gebildet wird. Dabei ist die Entfernung des Detektors 38 vom Detektor 35 in der Weise gewählt, dass der vom Hilfstransportband 16 zwischen einem Startsignal und dem unmittelbar darauffolgenden Stoppsignal zurückgelegte Weg der Hülsenlänge der Kreuzspulen 14 gleich ist. Bei einer solchen Anordnung lässt sich, insbesondere bei einer in der Längsrichtung des Gehäuses 39 veränderbaren einstellung der Fotozelle 38, die Weglänge der einzelnen Bewegufnen des Bandes 16 genau festlegen. Zusätzlich können die Beschleunigungen beim Abfahren und beim Anhalten des Bandes 16 beliebig berücksichtigt und damit auch beliebig gewählt werden.

Andererseits kann im Beispiel der Figuren 2 und 3 das Signal der Fotozelle 36 bewirken, dass das Anhalten des Hilfstransportbandes mit einer bestimmten Verzögerung erfolgt. Man erreicht damit, dass die vorderste Spule 14 am Anschlag 41 anstösst und die nachfolgenden Spulen gegen die vorderste Spule geschoben werden, so dass eventuell vorhandene Zwischenräume zwischen den aneinandergereihten Kreuzspulen 14 eliminiert werden. Das dabei auftretende Gleiten des Bandes 16 vor allem an der vordersten spule ist natürlich möglichst klein zu halten und so zu bemessen, dass dabei das durch die Erfindung zu vermeidende Rutschen der Fäden über den Spulenrand der Spulen hinweg nicht stattfindet.

Wie bereits erwähnt, ist über der Fotozelle 35 eine zweite Fotozelle 37 angebracht. Die letztere dient in einer weiteren ausführungsform zum Ueberwachen der Position der am Hilfstransportband 16 eingtreffenden Kreuzspulen 14. Falls beispielsweise bei diesen Spulen, wie dies normalerweise üblich ist, die Hülsenlänge kleiner ist als der Spulendurchmesser, so wird bei einer umgefallenen Spule bei deren Vorbeibewegen an der Zelle 37 in dieser kein Signal erzeugt. Dies kann zum Bilden einer Anzeige für das Vorliegen einer unerwünschten Lage einer Kreuzspule benützt werden. Es ist ersichtlich, dass durch eine geeignete. Positionierung einer solchen Fotozelle 37 oder durch das Vorsehen einer Mehrzahl von solchen, verschiedene Ueberwachungsmöglichkeiten für die Kreuzspulen geschaffen werden können.

Die beschriebenen Detektoren, welche auf einer Veränderung der Kapazität eines Kondensators oder auf dem Verändern eines auf eine Fotozelle auffallenden Lichtstrahls beruhen, sind Beispiele von berührungslosen Detektoren. Die Verwendung anderer Fühler, wie beispielsweise solche mechanischer Art, liegt aber ebenfalls im Bereich vorliegender Erfindung.

**Patentansprüche**

1. Vorrichtung an einer Spinnmaschine zum Wegfördern von auf der Spinnmaschine (11) bewickelten Kreuzspulen (14) mit einem Hilfstransportband (16), welches mit einem dem Wegführen der Spulen dienenden, sich längs der Spinnmaschine erstreckenden Haupttransportband (13) in einer Fluchtliegt, wobei der Anfang des Hilfstransportbandes an das Ende des Haupttransportbandes angrenzt und beim Transport der Spulen (14) auf den Transportbändern (13, 16) die Spulenachsen der Spulen parallel zu ihrer Bewegungsrichtung liegen, dadurch gekennzeichnet, dass zum Steuern der Bewegungen des Hilfstransportbandes (16) zwecks Aneinanderreihens der Spulen (14) auf diesem Band ein Detektor (23, 45) vorgesehen ist, der durch die von den Transportbändern (13, 16) bewegten Spulen (14) betätigbar ist und sich in dem Bereich befindet, in welchem die beiden Transportbänder (13, 16) aneinandergrenzen, und der beim Vorbeibewegen einer Spule (14) das Inbewegungsetzen des Hilfstransportbandes (16) bewirkt, und dass Mittel vorgeshen sind zum Anhalten des Hilfstransportbandes (16) nach einer Bewegung desselben um eine Strecke, welche wenigstens ungefähr der Hülsenlänge der Spulen (14) gleich ist, sowie Mittel (36) um nach Aneinanderreihen einer vorbestimmten Anzahl von Spulen (14) auf dem Hilfstransportband (16) zu einer Gruppe diese Spulengruppe bei stillstehendem Hilfstransportband (16) gemeinsam quer zu dessen Längsrichtung wegzufördern und in einer Reihe gemeinsam abzulegen.

2. Vorrichtung nach patentanspruch 1, dadurch gekennzeichnet, dass die Mittel zum Anhalten des Hilfstransportbandes (16) ein Wegmessgerät umfassen.

3. Vorrichtung nach Patentanspruch 1, dadurch gekennzeichnet dass, ein weiterer Detektor (36) vorgesehen ist, welcher beim Vorhandensein einer vorgegebenen Zahl von Spulen (14) auf dem Hilfstransportband (16 zum Erzeugen eines durch die vorderste dieser Spulen (14) bewirkten Signales dient.

4. Vorrichtung nach Patentanspruch 3, dadurch gekennzeichnet, dass ein Spulengreifer (21) zum gleichzeitigen Erfassen einer Mehrzahl von aneinandergereihten Spulen (14) und zum Wegfördern der erfassten Spulen (14) vorgesehen ist.

5. Vorrichtung nach Patentanspruch 3, dadurch gekennzeichnet, dass eine-parallel zum Hilfstransportband (16) verlaufende und sich unmittelbar neben diesem befindliche Mulde (31) vorgesehen ist, welche zur Aufnahme von mittels des Hilfstransportbandes (16) herangebrachten Spulen (14) dient, und dass ein Spulenschieber (33, 34) zum Abrollen der Spulen (14) vom Hilfsband (16) zur Mulde (31) vorhanden ist.

6. Vorrichtung nach Patentanspruch 1, dadurch gekennzeichnet, dass ein oder mehrere Detektoren (37) vorgesehen sind, welche durch die auf den Transportbändern (13, 16) bewegten Spulen (14) betätigbar sind und welche Anzeigesignale liefern, welche bei einer unerwünschten Lage einer Spule (14) verschieden sind von den bei einer ordnungsgemässen Lage der Spule durch die Detektoren gelieferten Signalen.

7. Vorrichtung nach Patentanspruch 3, dadurch gekennzeichnet, dass sich am Ende des vom Hilfstransportband (16) gebildeten Transportweges ein Anschlag (41) für die Spulen (14) und der weitere Detektor (36) befinden.

8. Vorrichtung nach einem der Patentansprüche 1 bis 7 dadurch gekennzeichnet, dass das die Spulen (14) ablegende Mittel (17, 18, 21, 33, 34) die gesammelten Spulen (14) in eine Reihe parallel zur Längsrichtung des Hilfstransportbandes (16) ablegt.

**Revendications**

1. Dispositif d'une machine à filer dans laquelle les bobines (14) à renvidage croisé, qui ont été renvidées dans la machine à filer (11), sont convoyées au loin à l'aide d'une bande transporteuse auxiliaire (16) située en alignement avec une bande transporteuse principale (13) qui s'étend dans le sens longitudinal de la machine à filer et sert à transporter les bobines, le départ de la bande transporteuse auxiliaire étant adjointe à l'extrémité de la bande transporteuse principale, et les axes de bobine des bobines s'étendant d'une manière parallèle à leur direction de mouvement pendant le transport des bobines (14) sur les bandes transporteuses (13, 16), caractérisé par le fait que, pour contrôler les mouvements de la bande transporteuse auxiliaire (16) afin d'obtenir une disposition des bobines (14) en une rangée sur ladite bande, un détecteur (23, 45) est prévu, qui peut être mis en action par les bobines (14) mûes par les bandes transporteuses (13, 16), et est situé dans la zone dans laquelle les deux bandes transporteuses (13, 16) sont adjointes l'une à l'autre, et qui provoque la mise en mouvement de la bande transporteuse auxiliaire (16) lors du passage d'une bobine (14), et que des moyens sont prévus pour arrêter la bande transporteuse auxiliaire (16) après un mouvement de celle-ci sur une distance qui est au moins approximativement égale à la longueur de fuseau des bobines (14), ainsi que des moyens (36) par qui, après qu'un nombre prédéterminé de bobines (14) ont été disposées en rangée sur la bande transporteuse auxiliaire (16) pour former un groupe, ledit groupe de bobines est convoyé au loin conjointement, avec la bande transporteuse auxiliaire (16) à l'arrêt, d'une manière transversale à la direction longitudinale de celle-ci, et est disposé ensemble en une rangée.

2. Dispositif selon revendication 1, caractérisé par le fait que les moyens utilisés pour arrêter la bande transporteuse auxiliaire (16) comprennent un appareil, mesurant la distance.

3. Dispositif selon revendication 1, caractérisé par le fait qu'un détecteur ultérieur (36) est prévu qui, lors de la présence d'un nombre prédéterminé de bobines (14) sur la bande transporteuse auxiliaire (16), sert à produire un signal provoqué par la bobine de tête de ces bobines (14).

4. Dispositif selon revendication 3, caractérisé par le fait qu'un grappin de bobine (21) est prévu pour saisir simultanément une pluralité de bobines adjacentes (14) et pour éloigner les bobines (14) saisies.

5. Dispositif selon revendication 3, caractérisé par le fait qu'une auge (31) est prévue s'étendant parallèlement à la bande transporteuse auxiliaire (16) et située immédiatement adjacente à celle-ci, et servant à recevoir de bobines (14) apportées à l'aide de la bande transporteuse auxiliaire (16), et par le fait qu'un pousseur de bobines (33, 34) est prévu pour faire rouler les bobines (14) depuis la bande transporteuse auxiliaire (16) dans l'auge (31).

6. Dispositif selon revendication 1, caractérisé par le fait qu'un ou plusieurs détecteurs (37) sont prévus et qui peuvent être mis en action par les bobines (14) mûes sur les bandes transporteuses (13, 16) et qui livrent des signaux indicatifs qui, lorsqu'une bobine (14) est dans une position non désirée, sont différents des signaux émis par les détecteurs lorsqu'une bobine est en position normale.

7. Dispositif selon revendication 3, caractérisé par le fait que, à la fin du parcours de transport déterminé par la bande transporteuse auxiliaire (16), se trouvent une butée (41) pour les bobines (14) et le détecteur ultérieur (36).

8. Dispositif selon l'une quelconque des revendications 1 à 7, caractérisé par le fait que le moyen (17, 18, 21, 33, 34) déposant les bobines (14) dépose les bobines collectées (14) en une rangée d'une manière parallèle à la direction longitudinale de la bande transporteuse auxiliaire (16).

**Claims**

1. An arrangement in a spinning machine whereby crosswound packages (14) which have been wound on the spinning machine (11) are conveyed away by an auxiliary conveyor belt (16) in alignment with a main conveyor belt (13) which extends longitudinally of the spinning machine and serves to carry off the packages, the start of the auxiliary conveyor belt adjoining the end of the main conveyor belt and the axes of the packages extending parallel to their direction of movement during transport of the packages (14) on the conveyor belts (13, 16), characterised in that in order to control the movements of the auxiliary conveyor belt (16) for the purposes of arranging the packages (14) in a row on said belt there is provided a detector (23, 45) which is operable by the packages (14) moved by the conveyor belts (13, 16) and is situated in the zone in which the two conveyor belts (13, 16) adjoin one another and which causes the auxiliary conveyor belt (16) to start to move on the passing of a package and in that means are provided to stop the auxiliary conveyor belt (16) after a movement thereof through a distance which is at least approximately equal to the tube length of the packages (14) and means (36) whereby, after a predetermined number of packages (14) have been arranged in a row on the auxiliary conveyor belt (16) to form a group, said group is carried off jointly, with the auxiliary conveyor belt (16) stationary, transversely of the longitudinal direction thereof and deposited jointly in a row.

2. An arrangement according to claim 1, characterised in that the means for stopping the auxiliary conveyor belt (16) comprise a distance measuring device.

3. An arrangement according to claim 1, characterised in that a further detector (36) is provided which upon the presence of a predetermined number of packages (14) on the auxiliary conveyor belt (16) serves to produce a signal in response to the front package of these packages (14).

4. An arrangement according to claim 3, characterised in that a package grab (21) is provided for simultaneous engagement of a plurality of adjacent packages (14) and for carrying away of the engaged packages (14).

5. An arrangement according to claim 3, characterised in that a trough (31) is provided extending parallel to the auxiliary conveyor belt (16) and located immediately adjacent thereto and serving to receive packages (14) brought thereto by means of the auxiliary conveyor belt (16) and in that a package pusher (33, 34) is provided for rolling the packages (14) from the auxiliary belt (16) to the trough (31).

6. An arrangement according to claim 1, characterised in that one or more detectors (37) are provided which are operable by the packages (14) moved on the conveyor belts (13, 16) and which supply indicating signals which, when a package (14) is in an undesired position, are different from the signals supplied by the detectors when the package is in a normal position.

7. An arrangement according to claim 3, characterised in that at the end of the transport path formed by the auxiliary conveyor belt (16) there are an abutment (41) for the packages (14) and the further detector (36).

8. An arrangement according to any of claims 1 to 7, characterised in that the means (17, 18, 21, 33, 34) depositing the packages (14) deposit the collected packages (14) in a row parallel to the longitudinal direction of the auxiliary conveyor belt (16).

Fig. 1

EP 0 099 959 B1

EP 0 099 959 B1

Fig. 2

Fig. 3

2